# EUROPEAN PATENT SPECIFICATION

(11) **EP 2 113 399 B1**
(45) Date of publication and mention of the grant of the patent: **29.02.2012**
(21) Application number: 09004345.6
(22) Date of filing: 26.03.2009
(51) Int. Cl.: B60C 11/00, B60C 11/03

(54) **Pneumatic tire**
Luftreifen
Pneu

(30) Priority: 28.04.2008 JP 2008117723
(43) Date of publication of application: 04.11.2009
(73) Proprietor: THE YOKOHAMA RUBBER CO., LTD., Tokyo 105-8685 (JP)
(72) Inventor: Kojima, Hiroyuki c/o The Yokohama Rubber Co., Ltd., Hiratsuka-shi Kanagawa 254-8601 (JP)
(74) Representative: HOFFMANN EITLE

(56) References cited:
- EP-A- 0 524 568
- EP-A- 0 671 288
- EP-A- 1 529 659
- JP-A- 4 108 006

## Description

### BACKGROUND OF THE INVENTION

### 1. Field of the Invention

The present invention relates to a pneumatic tire. Embodiments of the present invention can provide a tire which is suitable as a low profile tire for a sport utility vehicle (SUV), which simultaneously achieves reduction of pattern noise and improvement in driving stability on a dry road surface.

### 2. Description of the Related Art

As a pneumatic tire designed to be mounted in such a manner that a designated side of the tire faces to the outside of the vehicle, one configured as follows has heretofore been proposed in order to reduce pattern noise while ensuring driving stability both on a dry road and a wet road. Specifically, in the proposed pneumatic tire, the number of pitches of block arrays is set to 30 to 60 in a vehicle outer side region and to 45 to 70 in a vehicle inner side region, and further, a ratio P_{B}/P_{A} of the number P_{B} of pitches in the vehicle inner side region to the number P_{A} of pitches in the vehicle outer side region is set to 1.3 to 2.0 (see, for example, Japanese patent application Kokai publication No. Hei 4-108006).

However, if the ratio P_{B}/P_{A} of the number P_{B} of pitches in the vehicle inner side region to the number P_{A} of pitches in the vehicle outer side region is set to 1.3 to 2.0 as described above, a rigidity balance between the vehicle outer side region and the vehicle inner side region is impaired, which makes it difficult to achieve both reduction of pattern noise and improvement in driving stability on a dry road surface. That is, if the number P_{B} of pitches in the vehicle inner side region is set extremely large, driving stability on a dry road surface tends to be lower, whereas, if the number P_{A} of pitches in the vehicle outer side region is set extremely small, pattern noise tends to be higher. Therefore, the current situation is that these required characteristics have not yet been concurrently fulfilled.

EP 1529659 A2 discloses a pneumatic tire for a motor vehicle, for driving in winter conditions, which has lateral grooves in shoulder block rows at outer zones at the appropriate pitch and which are narrower than those within the shoulder block rows at the inner zones. The shoulder block rows at the outer zones are wider than those at the inner zones. The gaps between the cuts in the outer shoulder block rows are longer than those between the cuts at the inner rows, and the outer cuts are narrower than the inner cuts.

The disclosure in EP 1529659 A2 is considered to fall within the scope of the pre-characterizing part of claim 1.

### SUMMARY OF THE INVENTION

Embodiments of the present invention can provide a pneumatic tire which achieves both reduction of pattern noise and improvement in driving stability on a dry road surface.

According to the present invention, there is provided a pneumatic tire designed to be mounted in such a manner that a designated side of the tire faces to the outside of a vehicle. The pneumatic tire comprises multiple block elements arrayed in a circumferential direction of the tire that are formed in each of regions sectioned by an equator of the tire in a tread portion of the tire, the regions on vehicle inner and outer sides: the number of pitches of the block elements on the vehicle inner side is set to 60 to 80; the number of pitch variations of the block elements on the vehicle inner side is set to at least 4; the number of pitches of block elements on the vehicle outer side is set to 50 to 70; the number of pitch variations of the block elements on the vehicle outer side is set to at least 4; the number of pitches of the block elements on the vehicle inner side is set larger than the number of pitches of the block elements on the vehicle outer side; and a ratio of an average pitch length of the block elements on the vehicle outer side to an average pitch length of the block elements on the vehicle inner side is set in a range of 1.05 to 1.20, characterized in that, a continuous land portion continuing in the tire circumferential direction is provided in a shoulder region on the vehicle outer side of the tire.

With embodiments of the present invention, reduction of pattern noise and improvement in driving stability on a dry road surface can both be achieved by having: the number of pitches of the block elements on the vehicle inner side set to 60 to 80; the number of pitch variations of the block elements on the vehicle inner side set to at least 4; the number of pitches of block elements on the vehicle outer side set to 50 to 70; the number of pitch variations of the block elements on the vehicle outer side set to at least 4; the number of pitches of the block elements on the vehicle inner side set larger than the number of pitches of the block elements on the vehicle outer side; and the ratio of the average pitch length of the block elements on the vehicle outer side to the average pitch length of the block elements on the vehicle inner side set in a range of 1.05 to 1.20.

Furthermore, since a continuous land portion continuing in the tire circumferential direction is provided in a shoulder region on the vehicle outer side of the tire, it is possible to achieve both reduction of pattern noise and improvement in driving stability on a dry road surface.

That is, by having the number of pitches of the block elements on the vehicle outer side smaller than the number of pitches of the block elements on the vehicle inner side, block rigidity of the region on the vehicle outer side is made relatively large, whereby driving stability on a dry road surface can be ensured. Additionally, by having the number of pitches of the block elements on the vehicle inner side and the number of pitches of the block elements on the vehicle outer side different from each other, peaks of order components of pattern noise are dispersed, whereby pattern noise can be reduced. However, if reduction in pattern noise is to be dependent only on setting of the number of pitches of the block elements on the vehicle inner side and the number of pitches of the block elements on the vehicle outer side, the order components of pattern noise are not sufficiently dispersed, which makes it difficult to achieve both reduction of pattern noise and improvement in driving stability on a dry road surface To address above problems, each of the numbers of pitch variations of the block elements on the vehicle inner side and on the vehicle outer side is set to at least 4, and the ratio of the average pitch length of the block elements on the vehicle outer side to the average pitch length of the block elements on the vehicle inner side is set in a range of 1.05 to 1.20. Accordingly, it becomes possible to reduce pattern noise while improving driving stability on a dry road surface.

With embodiments of the present invention, which achieve both reduction of pattern noise and improvement in driving stability on a dry road surface, it is preferable that, while a ratio of the largest pitch length of the block elements on the vehicle inner side to the smallest pitch length thereof be set to 1.36 to 1. 60, a ratio of the largest pitch length of the block elements on the vehicle outer side to the smallest pitch length thereof be set to 1.36 to 1.60.

Additionally, in order to achieve both reduction of pattern noise and improvement in driving stability on a dry road surface, it is preferable that, a groove area rate in the region on the vehicle inner side is set larger than a groove area rate in the region on the vehicle outer side, a difference between the groove area rates is set to 5% to 10%. Here, the groove area rate of each of the regions is a rate (%) of an area of grooves within a contacting width. The contacting width is a dimension of a footprint in a width direction of the tire, the footprint being obtained by pushing the tread portion of the tire against a plain surface with a load condition being 60 % of the maximum load capability defined by a standard (which is, for example, JATMA, ETRTO, TRA or Chinese GB standards) with which the tire complies.

Additionally, in order to enhance the effect of reducing pattern noise, it is preferable that, the number of pitch variations of the block elements on the vehicle inner side be set to at least 5, and the number of pitch variations of the block elements on the vehicle outer side is set to at least 5.

Herein, a block element means each of block-shaped constituent elements arrayed one after another in the tire circumferential direction, each adjacent ones of which are separated with a groove interposed therebetween, the groove extending in the tire width direction. This block element may be completely separated from the other blocks by the grooves extending in the tire width direction, or may not be completely separated from the other blocks, but may be partly connected to one another.

### BRIEF DESCRIPTION OF THE DRAWINGS

To enable a better understanding of the present invention and to show how the same may be carried into effect, reference will now be made, by way of example only, to the accompanying drawings, in which:-

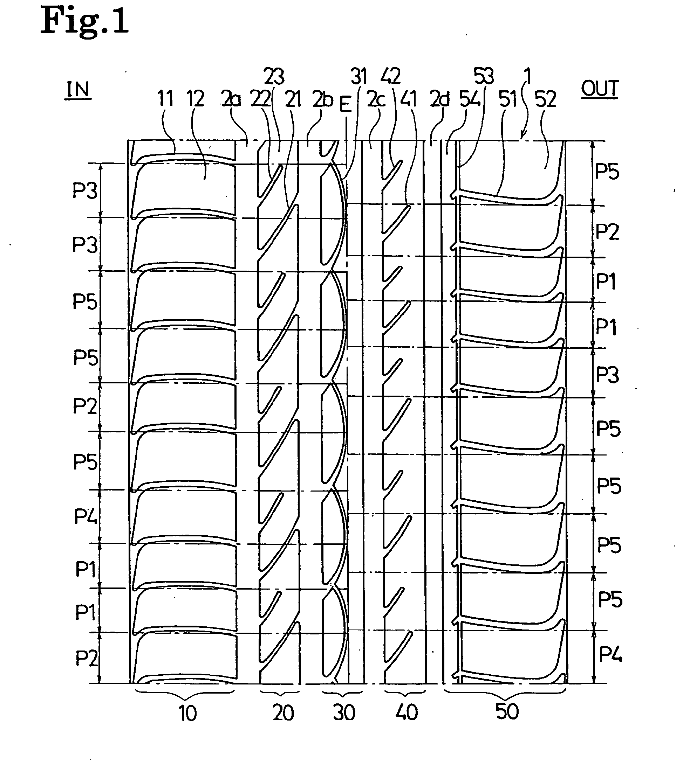

Fig. 1 is an exploded view showing a tread pattern of a pneumatic tire which is an embodiment of the present invention.

### DETAILED DESCRIPTION

Fig. 1 is an exploded view showing a tread pattern of a pneumatic tire according to an embodiment of the present invention. The pneumatic tire according to this embodiment is designed to be mounted in such a manner that a designated side of the tire faces to the outside of the vehicle, but has a tread design which does not have a designated rotational direction. In Fig. 1, "IN" indicates, at the mounting of the tire, a vehicle inner side of the tire, and "OUT" indicates a vehicle outer side of the tire.

As shown in Fig. 1, four main grooves 2a to 2d straightly extending in a circumferential direction of the tire are formed in a tread portion 1, and five land portions 10, 20, 30, 40 and 50 are sectioned by these main grooves 2a to 2d, and arranged in this order from the inside to the outside of the vehicle.

Multiple lug grooves 11 extending in a width direction of the tire are formed in the land portion 10 located in a shoulder region on the vehicle inner side. The land portion 10 is sectioned into multiple blocks 12 by these lug grooves 11.

In the land portion 20 located between the land portions 10 and 30, alternately formed in the tire circumferential direction are: multiple lug grooves 21 traversing the land portion 20 while slanting with respect to the tire circumferential direction; and multiple lug grooves 22 each having one end thereof open to the main groove 2a on the vehicle inner side, and having the other end thereof terminated inside the land portion 20 while slanting with respect to the tire circumferential direction. Here, the land portion 20 is sectioned into multiple blocks 23 by the lug grooves 21.

In the land portion 30 located on an equator E of the tire, multiple arc grooves 31 each extending in an arc-like shape along the tire circumferential direction are formed.

Each of the arc grooves 31 has one end thereof open to the main groove 2b on the vehicle inner side, and has the other end thereof communicating with adjacent one of the arc grooves 31.

In the land portion 40 located between the land portions 30 and 50, alternately formed in the tire circumferential direction are: multiple longer lug grooves 41 each having one end thereof open to the main groove 2c on the vehicle inner side, and having the other end thereof terminated inside the land portion 40 while slanting with respect to the tire circumferential direction; and multiple shorter lug grooves 41 each having one end thereof open to the main groove 2c on the vehicle inner side, and having the other end thereof terminated inside the land portion 40 while slanting with respect to the tire circumferential direction.

In the land portion 50 located in a shoulder region on the vehicle outer side, multiple lug grooves 51 extending in the tire width direction, and a narrow groove 53 extending in the tire circumferential direction are formed. The land portion 50 is sectioned into multiple blocks 52 and a continuous land portion 54 continuing in the tire circumferential direction by the lug grooves 51 and the narrow groove 53.

In the pneumatic tire configured as described above, the number of pitches of block elements (the blocks 12) on a circumference of the tire which are located in the shoulder region on the vehicle inner side is set to 60 to 80, the number of pitch variations of the block elements on the vehicle inner side is set to at least 4, the number of pitches of block elements (the blocks 52) on a circumference of the tire which are located in the shoulder region on the vehicle outer side is set to 50 to 70, and the number of pitch variations of the block elements on the vehicle outer side is set to at least 4. Furthermore, the number of pitches of the block elements on the vehicle inner side is set larger than that on the vehicle outer side, and a ratio of an average pitch length of the block elements on the vehicle outer side to an average pitch length of the block elements on the vehicle inner side is set in a range of 1.05 to 1.20.

More specifically, five different pitch lengths P1 to P5 (P1 < P2 < P3 < P4 < P5) are set to the block elements (the blocks 12) on the vehicle inner side, and five pitch variations based on these pitch lengths P1 to P5 are randomly allotted in the tire circumferential direction. Likewise, five different pitch lengths P1 to P5 (P1 < P2 < P3 < P4 < P5) are also set to the block elements (the blocks 52) on the vehicle outer side, and five pitch variations based on these pitch lengths P1 to P5 are randomly allotted in the tire circumferential direction.

By setting, as described above, the numbers of pitches of the block elements, the numbers of pitch variations, and the average pitch lengths in the predetermined ranges, both reduction of pattern noise and improvement in driving stability on a dry road surface can be achieved.

Here, the number of pitches of the block elements, in the circumference of the tire, located in the shoulder region on the vehicle inner side is set to 60 to 80, or more preferably, 70 to 80. This is because a pattern noise reducing effect becomes insufficient if this number of pitches is too small, and driving stability is degraded if this pitch number is too large in contrast. Moreover, the number of pitch variations of the block elements on the vehicle inner side is set to at least 4, or more preferably 5 to 10. This is because a pattern noise reducing effect becomes insufficient if this number of pitch variations is too small, and a mold manufacturing cost becomes high if number of pitch variations is too large.

Here, the number of pitches of the block elements, in the circumference of the tire, located in the shoulder region on the vehicle outer side is set to 50 to 70, or more preferably, 60 to 70. This is because a pattern noise reducing effect becomes insufficient if this pitch number is too small, and driving stability is degraded if this pitch number is too large in contrast. Moreover, the number of pitch variations of the block elements on the vehicle outer side is set to at least 4, or more preferably 5 to 10. This is because a pattern noise reducing effect becomes insufficient if this pitch variation number is too small, and a mold manufacturing cost becomes high if this pitch variation number is too large.

At the same time as the number of pitches of the block elements on the vehicle inner side is set larger than the number of pitches of the block elements on the vehicle outer side, the ratio of the average pitch length of the block elements on the vehicle outer side to the average pitch length of the block elements on the vehicle inner side is set in a range of 1.05 to 1.20. Note that the ratio of the average pitch length of the block elements on the vehicle outer side to the average pitch length of the block elements on the vehicle inner side is equivalent to an inverse of a ratio of the number of pitches of the block elements on the vehicle outer side to the number of pitches of the block elements on the vehicle inner side. If the above average pitch length ratio does not fall into the above range, an effect of achieving both reduction of pattern noise and improvement in driving stability on a dry road surface cannot be obtained.

In the above pneumatic tire, it is preferable that a ratio (P5/P1) of the largest pitch length P5 of the block elements on the vehicle inner side to the smallest pitch length P1 thereof be set to 1.36 to 1.60, and a ratio (P5/P1) of the largest pitch length P5 of the block elements on the vehicle outer side to the smallest pitch length P1 thereof be set to 1. 36 to 1.60. Thereby, enhanced driving stability on a dry road surface and reduced pattern noise can both be achieved at higher levels. Here, if any one of the above ratios (P5/P1) is too small, a pattern noise reducing effect becomes insufficient, whereas, if any one of the above ratios (P5/P1) is too large, driving stability is degraded.

Additionally, if a region on the vehicle inner side and a region on the vehicle outer side are sectioned by the tire equator E, it is preferable that a groove area rate in the region on the vehicle inner side be set larger than a groove area rate in the region on the vehicle outer side, and a difference between these groove area rates be set to 5 to 10 %. Thereby, reduction of pattern noise and improvement in driving stability on a dry road surface can both be achieved at higher levels. Here, if the above difference between the groove area rates does not fall into the above range, an effect of achieving both reduction of pattern noise and improvement in driving stability on a dry road surface becomes insufficient.

Furthermore, the continuous land portion 54 continuing in the tire circumferential direction is provided in the shoulder region on the vehicle outer side in the above pneumatic tire. The continuous land portion 54 of this type contributes to reduction of pattern noise and improvement in driving stability on a dry road surface.

While one exemplary embodiment of the present invention has been described in detail hereinabove, it should be understood that various alterations, substitutions and replacements can be made thereto insofar as they do not depart from the scope of the present invention as defined by the appended claims.

### EXAMPLES

Pneumatic tires of Examples 1 to 8 (see Fig. 1) and Comparative Examples 1 to 3 were prepared, each having a tire size of 275/45R20 and designed to be mounted in such a manner that a designated side of the tire faces to the outside of the vehicle. The pneumatic tires thus prepared were prepared differently as shown in Table 1 in terms of: the number of pitches of block elements on vehicle inner side; the number of pitches of block elements on the vehicle outer side; ratio of the largest pitch length of the block element on the vehicle inner side to the smallest pitch length thereof; ratio of the largest pitch length of the block element on the vehicle outer side to the smallest pitch length thereof; the number of pitch variations of the block elements on the vehicle inner side; the number of pitch variations of the block elements on the vehicle outer side; ratio of average pitch length of the block elements on the vehicle outer side to average pitch length of the block elements on the vehicle inner side; and difference obtained by subtracting groove area rates on the vehicle outer side region from groove area rates on the vehicle inner side region.

Driving stability on the dry road surface and pattern noise were evaluated for these tires, by the following evaluation method, and results thereof are also shown in Table 1.

### Driving Stability on Dry Road Surface:

Each of the test tires was fitted onto a wheel having a rim size of 20 x 9J, the test tire with the wheel was mounted on a four-wheel drive vehicle, and then the test tire was inflated to an air pressure of 240 kPa. After that, a feeing test was conducted on the tire to evaluate driving stability on a dry road surface. Results of the evaluation are shown in indices where a result for Comparative Example 1 is taken as an index of 100. A larger value of the index means that driving stability on a dry road surface is better.

### Pattern Noise:

Each of the test tires was fitted onto a wheel having a rim size of 20 x 9J, the test tire with the wheel was mounted on a four-wheel drive vehicle, and then the test tire was inflated to an air pressure of 240 kPa. After that, a feeing test was conducted on the tire to evaluate pattern noise on a dry road surface. Results of the evaluation are shown in indices where a result for Comparative Example 1 is taken as an index of 100. A larger value of the index means that pattern noise is lower.

### [Table 1]

**Table 1**

| | Comparative Example 1 | Comparative Example 2 | Comparative Example 3 | Example 1 | Example 2 | Example 3 | Example 4 | Example 5 | Example 6 | Example 7 | Example 8 |
|---|---|---|---|---|---|---|---|---|---|---|---|
| Number of Pitches on Vehicle Inner Side | 57 | 40 | 57 | 74 | 74 | 74 | 60 | 80 | 74 | 74 | 74 |
| Number of Pitches on Vehicle Outer Side | 40 | 30 | 19 | 66 | 66 | 66 | 50 | 70 | 66 | 66 | 70 |
| Ratio of Largest Pitch Length to Smallest Pitch Length on Vehicle Inner Side | 1.25 | 1.65 | 1.50 | 1.45 | 1.25 | 1.65 | 1.45 | 1.45 | 1.45 | 1.45 | 1.45 |
| Ratio of Largest Pitch Length to Smallest Pitch Length on Vehicle Outer Side | 1.25 | 1.65 | 1.50 | 1.45 | 1.25 | 1.65 | 1.45 | 1.45 | 1.45 | 1.45 | 1.45 |
| Number of Pitch Variations on Vehicle Inner Side | 3 | 3 | 3 | 4 | 4 | 4 | 4 | 4 | 5 | 5 | 4 |
| Number of Pitch Variations on Vehicle Outer Side | 3 | 3 | 3 | 4 | 4 | 4 | 4 | 4 | 5 | 5 | 4 |
| Average Pitch Length Ratio (OUT/IN) | 1.43 | 1.33 | 3.00 | 1.12 | 1.12 | 1.12 | 1.20 | 1.14 | 1.12 | 1.12 | 1.05 |
| Difference in Groove Area Rate (IN - OUT) (%) | 3 | 3 | 3 | 5 | 5 | 5 | 5 | 5 | 5 | 10 | 5 |
| Driving Stability on Dry Road Surface (Index) | 100 | 105 | 105 | 105 | 103 | 107 | 106 | 105 | 106 | 108 | 103 |
| Pattern Noise (Index) | 100 | 95 | 90 | 105 | 107 | 103 | 103 | 105 | 107 | 103 | 106 |

As is apparent from this Table 1, all of the tires of Examples 1 to 8 were better in driving stability on a dry road surface, and also were found to have lower pattern noise, than the tire of Comparative Example 1. In each of Comparative Examples 2 and 3, worsening of pattern noise became evident in association with improvement in driving stability on a dry road surface because the numbers of pitches of the block elements and the numbers of pitch variations thereof were small, and also because the average pitch length ratio was large.

### REFERENCE SIGNS LIST

1: Tread portion
2a to 2d: Main grooves
10, 20, 30, 40, 50: Land portions
11, 21, 22, 41, 42, 51: Lug grooves
12, 23, 52: Blocks
31: Arc grooves
53: Narrow groove
54: Continuous land portion

## Claims

1. A pneumatic tire designed to be mounted in such a manner that a designated side of the tire faces to the outside of a vehicle, wherein
a plurality of block elements (12, 52) arrayed in a circumferential direction of the tire are formed in each of regions sectioned by an equator of the tire in a tread portion (1) of the tire, the regions on vehicle inner and outer sides,
the number of pitches of the block elements on the vehicle inner side is set to 60 to 80,
the number of pitch variations of the block elements (12) on the vehicle inner side is set to at least 4,
the number of pitches of block elements on the vehicle outer side is set to 50 to 70,
the number of pitch variations of the block elements (52) on the vehicle outer side is set to at least 4,
the number of pitches of the block elements (12) on the vehicle inner side is set larger than the number of pitches of the block elements (52) on the vehicle outer side, and
a ratio of an average pitch length of the block elements (52) on the vehicle outer side to an average pitch length of the block elements (12) on the vehicle inner side is set in a range of 1.05 to 1.20, **characterized in that**,
a continuous land portion (54) continuing in the tire circumferential direction is provided in a shoulder region on the vehicle outer side of the tire.

2. The pneumatic tire according to claim 1, wherein
a ratio of the largest pitch length of the block elements (12) on the vehicle inner side to the smallest pitch length thereof is set to 1.36 to 1.60, and a ratio of the largest pitch length of the block elements (52) on the vehicle outer side to the smallest pitch length thereof is set to 1.36 to 1.60.

3. The pneumatic tire according to claim 1, wherein
the number of pitch variations of the block elements (12) on the vehicle inner side is set to at least 5, and the number of pitch variations of the block elements (52) on the vehicle outer side is set to at least 5.

4. The pneumatic tire according to any one of claims 1 to 3, wherein
a groove area rate in the region on the vehicle inner side is set larger than a groove area rate in the region on the vehicle outer side, and
a difference between the groove area rates is set to 5% to 10%.

## Patentansprüche

1. Luftreifen, der so ausgestaltet ist, dass er in einer solchen Art anzubringen ist, dass eine vorher festgelegte Seite des Reifens zu der Außenseite eines Fahrzeugs zeigt, wobei
mehrere Blockelemente (12, 52), die in einer Umfangsrichtung des Reifens angeordnet sind, in jedem der Bereiche ausgebildet sind, die durch einen Reifenäquator in einem Laufflächenabschnitt (1) des Reifens abgetrennt werden, wobei die Bereiche auf der inneren und der äußeren Seite des Fahrzeugs sind,
die Anzahl der Teilungen der Blockelemente auf der Fahrzeuginnenseite zwischen 60 und 80 liegt,
die Anzahl der Teilungsvariationen der Blockelemente (12) auf der Fahrzeuginnenseite wenigstens 4 ist,
die Anzahl der Teilungen der Blockelemente auf der Fahrzeugaußenseite zwischen 50 und 70 liegt,
die Anzahl der Teilungsvariationen der Blockelemente (52) auf der Fahrzeugaußenseite wenigstens 4 ist,
die Anzahl der Teilungen der Blockelemente (12) auf der Fahrzeuginnenseite größer ist als die Anzahl der Teilungen der Blockelemente (52) auf der Fahrzeugaußenseite, und
ein Verhältnis einer durchschnittlichen Teilungslänge der Blockelemente (52) auf der Fahrzeugaußenseite zu einer durchschnittlichen Teilungslänge der Blockelemente (12) auf der Fahrzeuginnenseite zwischen 1,05 und 1,20 liegt, **dadurch gekennzeichnet, dass**
ein kontinuierlicher Vorstehabschnitt (54), der sich in der Reifenumfangsrichtung fortsetzt, in einem Schulterbereich auf der Fahrzeugaußenseite des Reifens vorgesehen ist.

2. Luftreifen nach Anspruch 1, bei dem
ein Verhältnis der größten Teilungslänge der Blockelemente (12) auf der Fahrzeuginnenseite zu deren kleinster Teilungslänge zwischen 1,36 und 1,60 liegt, und
ein Verhältnis der größten Teilungslänge der Blockelemente (52) auf der Fahrzeugaußenseite zu deren kleinster Teilungslänge zwischen 1,36 und 1,60 liegt.

3. Luftreifen nach Anspruch 1, bei dem
die Anzahl der Teilungsvariationen der Blockelemente (12) auf der Fahrzeuginnenseite wenigstens 5 ist, und
die Anzahl der Teilungsvariationen der Blockelemente (52) auf der Fahrzeugaußenseite wenigstens 5 ist.

4. Luftreifen nach einem der Ansprüche 1 bis 3, bei dem
ein Nutflächenanteil in dem Bereich auf der Fahrzeuginnenseite größer ist als ein Nutflächenanteil im Bereich auf der Fahrzeugaußenseite, und
eine Differenz zwischen den Nutflächenanteilen zwischen 5% und 10% liegt.

## Revendications

1. Pneu pneumatique conçu pour être monté de sorte qu'un côté désigné du pneu fait face à l'extérieur d'un véhicule, dans lequel
une pluralité d'éléments formant blocs (12, 52) agencés dans une direction circonférentielle du pneu sont formés dans chacune de régions coupées par une ligne équatoriale du pneu dans une partie formant bande de roulement (1) du pneu, les régions étant sur les côtés intérieur et extérieur au véhicule,
le nombre de pas des éléments formant blocs sur le côté intérieur au véhicule est fixé à 60 à 80,
le nombre de variations de pas des éléments formant blocs (12) sur le côté intérieur au véhicule est fixé à au moins 4,
le nombre de pas d'éléments formant blocs sur le côté extérieur au véhicule est fixé à 50 à 70,
le nombre de variations de pas des éléments formant blocs (52) sur le côté extérieur au véhicule est fixé à au moins 4,
le nombre de pas des éléments formant blocs (12) sur le côté intérieur au véhicule est fixé plus grand que le nombre de pas des éléments formant blocs (52) sur le côté extérieur au véhicule, et
un rapport d'une longueur moyenne de pas des éléments formant blocs (52) sur le côté extérieur au véhicule sur une longueur moyenne de pas des éléments formant blocs (12) sur le côté intérieur au véhicule est fixé dans une plage de 1,05 à 1,20, **caractérisé en ce que**,
une partie de contact continue (54) continuant dans la direction circonférentielle du pneu est réalisée dans une région d'épaulement sur le côté extérieur au véhicule du pneu.

2. Pneu pneumatique selon la revendication 1, dans lequel
un rapport de la longueur de pas la plus grande des éléments formant blocs (12) sur le côté intérieur au véhicule sur la longueur de pas la plus petite de ceux-ci est fixé à 1,36 à 1,60, et
un rapport de la longueur de pas la plus grande des éléments formant blocs (52) sur le côté extérieur au véhicule sur la longueur de pas la plus petite de ceux-ci est fixé à 1,36 à 1,60.

3. Pneu pneumatique selon la evendication 1, dans lequel
le nombre de variations de pas des éléments formant blocs (12) sur le côté intérieur au véhicule est fixé à au moins 5, et
le nombre de variations de pas des éléments formant blocs (52) sur le côté extérieur au véhicule est fixé à au moins 5.

4. Pneu pneumatique selon l'une quelconque des revendications 1 à 3, dans lequel
un taux de surface de rainure dans la région sur le côté intérieur au véhicule est fixé plus grand qu'un taux de surface de rainure dans la région sur le côté extérieur au véhicule, et
une différence entre les taux de surface de rainure est fixée à 5 % à 10 %.
